# EUROPEAN PATENT APPLICATION

(11) **EP 4 756 066 A1**
(43) Date of publication of application: **10.06.2026**
(21) Application number: 24848549.2
(22) Date of filing: 02.02.2024
(51) Int. Cl.: C23C 2/06, C23C 2/02, C23C 2/20, C23C 2/28, C23C 2/40, C23C 30/00, C21D 9/46, C22C 18/00, C22C 18/04, C22C 38/00, C22C 38/02, C22C 38/04, C22C 38/06, C22C 38/58

(54) **PLATED STEEL SHEET**

(30) Priority: 03.08.2023 JP 2023127004
(71) Applicant: NIPPON STEEL CORPORATION, Tokyo 100-8071 (JP)
(72) Inventor: MITSUNOBU, Takuya, Tokyo 100-8071 (JP); KIREKAWA, Naoto, Tokyo 100-8071 (JP); URANAKA, Masaaki, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2024/003579
(87) International publication number: WO 2025/027886

(57) **Abstract**

The present invention relates to a plated steel sheet having a high LME resistance. The plated steel sheet of the present invention has a tensile strength of 780 MPa or more and a predetermined chemical composition. The plating layer contains Zn. A depth in a thickness direction of the steel sheet from an interface of the steel sheet and the plating layer wherein a C concentration measured by GDS is 0.05% or less is 8 µm or more, a thickness in a thickness direction of the steel sheet from an interface of the steel sheet and the plating layer of the layer with an area ratio of the ferrite phase of 90% or more is 8 µm or more, and at a position of 4 µm in a thickness direction of the steel sheet from an interface of the steel sheet and the plating layer, the solute amounts of the metal Si and metal Al in the ferrite phase are a total of 0.3% or more.

## Description

### FIELD

The present invention relates to a plated steel sheet. More specifically, the present invention relates to plated steel sheet having a high LME resistance.

### BACKGROUND

In recent years, the steel sheet used in automobiles, household electric appliance products, building materials, and other various fields have been made higher in strength. For example, in the automobile field, use of high strength steel sheet has been increasing for the purpose of lightening the weight of vehicle bodies for improving fuel efficiency.

In welding of zinc-based plated steel sheet, in particular high strength steel sheet, for example, as described in PTL 1, the drop in weldability due to liquid metal embrittlement (LME) cracking sometimes becomes a problem. LME cracking is believed to be caused by the surface layer part of steel sheet transforming to austenite at the time of welding, molten zinc penetrating the grain boundaries causing the steel sheet to become embrittled, and further a tensile stress being applied to the steel sheet at the time of welding.

PTL 2 discloses steel sheet suppressed in LME cracking and improved in weldability which has particle size 20 nm or more Si oxide grains present at the surface layer part of the steel sheet in a 3000 to 6000/mm² number density in a suitable particle size distribution.

### [CITATION LIST]

### [PATENT LITERATURE]

[PTL 1] WO2019/116531
[PTL 2] WO2020/218575

### SUMMARY

### [TECHNICAL PROBLEM]

To prevent LME cracking, it is effective to keep Zn etc. contained in the plating layer from penetrating steel sheet transformed to austenite. There is room for improvement on this point.

The present invention, in consideration of such a situation, has as its technical problem to provide plated steel sheet having a high LME resistance.

### [SOLUTION TO PROBLEM]

The inventors intensively studied means for solving this technical problem. As a result, they discovered that it becomes possible to suppress LME by forming a decarburized ferrite phase containing Si and Al at the steel sheet surface layer in a lamellar form.

The present invention is a result of further studies conducted based on the above findings and has as its gist the following:

(1) A plated steel sheet comprising a steel sheet and a plating layer provided on one surface or both surfaces of the steel sheet, wherein a tensile strength of the plated steel sheet is 780 MPa or more; a chemical composition of the steel sheet comprises, by mass%, C: 0.05 to 0.40%, Si: 0.7 to 3.0%, Mn: 0.1 to 5.0%, sol. Al: 0.5 to 2.0%, P: 0.0300% or less, S: 0.0300% or less, N: 0.0100% or less, B: 0 to 0.0100%, Ti: 0 to 0.1500%, Nb: 0 to 0.150%, V: 0 to 0.150%, Cr: 0 to 2.00%, Ni: 0 to 2.00%, Cu: 0 to 2.0000%, Mo: 0 to 1.00%, W: 0 to 1.000%, Ca: 0 to 0.1000%, Mg: 0 to 0.100%, Zr: 0 to 0.100%, Hf: 0 to 0.100%, REM: 0 to 0.1000% and a balance of Fe and impurities, a total of the contents of the Si and sol. Al being 1.3% or more; the plating layer comprises Zn; a depth in a thickness direction of the steel sheet from an interface of the steel sheet and the plating layer wherein a C concentration measured by GDS is 0.05% or less is 8 µm or more; a thickness in a thickness direction of the steel sheet from an interface of the steel sheet and the plating layer of the layer with an area ratio of the ferrite phase of 90% or more is 8 µm or more; and at a position of 4 µm in a thickness direction of the steel sheet from an interface of the steel sheet and the plating layer, the solute amounts of the metal Si and metal Al in the ferrite phase are a total of 0.3% or more.
(2) The plated steel sheet of (1), wherein the depth in the thickness direction of the steel sheet from the interface of the steel sheet and the plating layer wherein the C concentration measured by GDS is 0.05% or less is 15 µm or more.
(3) The plated steel sheet of (1) or (2), wherein the thickness in the thickness direction of the steel sheet from the interface of the steel sheet and the plating layer of the layer with an area ratio of ferrite of 90% or more is 20 µm or more and the solute amounts of the metal Si and metal Al in the ferrite phase are a total of 0.5% or more.
(4) The plated steel sheet according to any one of (1) to (3), wherein the plating layer comprises, by mass%, Fe: 0 to 3.0%, Al: 0 to 30.0%, Mg: 0 to 10.0% and a balance of Zn and impurities.
(5) The plated steel sheet of (4), wherein the plating layer comprises, by mass%, Al: 10.0 to 30.0% and Mg: 4.5 to 10.0%.

### [ADVANTAGEOUS EFFECTS OF INVENTION]

According to the present invention, it is possible to obtain plated steel sheet having a high LME resistance.

### BRIEF DESCRIPTION OF DRAWINGS

FIG. 1 is a schematic view for explaining a lamellar shaped ferrite phase in the plated steel sheet of the present invention.
FIG. 2 is a view for explaining a position of cracking covered in evaluation of LME resistance in an embodiment.

### DESCRIPTION OF EMBODIMENTS

Below, one embodiment of the present invention will be explained. The present invention is not limited to the following embodiment. First, a summary of the improvement of LME resistance in the present embodiment will be explained.

LME cracking is believed to be caused by the surface layer part of steel sheet being heated and transforming to austenite at the time of spot welding, the plating melting and penetrating the grain boundaries of the austenite, the molten zinc causing the steel sheet to become embrittled and further a tensile stress being applied to the steel sheet at the time of welding. The inventors came up with the idea of utilizing the structure of the surface layer part of steel sheet near the interface with the plating layer as a method for improving the LME resistance and suppressing the occurrence of LME. Specifically, they came up with the idea of making the structure of the surface layer of the steel sheet a structure of mainly ferrite with a low C concentration and low LME sensitivity and further dissolving metal Si and metal Al in the ferrite phase to thereby make the ferrite stabilize.

In the present embodiment, when annealing steel sheet, in the first half of the annealing, the surface layer of the steel sheet is decarburized and internal oxidation at the surface layer of the steel sheet heading inside the steel sheet is made to progress and, in the second half, only decarburization is made to progress and Si and Al are made to diffuse from inside the steel sheet to the surface side so as to make them dissolve in the ferrite phase at the steel sheet surface layer. The present embodiment was made based on the finding that by applying strain to the surface layer of steel sheet and annealing at a suitable dew point, it is possible to make the above-mentioned decarburization and internal oxidation progress. Note that in this Description, the "surface layer" indicates a range from the steel sheet surface down to a depth of 100 µm or so.

Below, the present embodiment will be explained in detail.

### 〈〈Plated Steel Sheet〉〉

The plated steel sheet of the present embodiment is provided with steel sheet and a plating layer provided on one surface or both surfaces of the steel sheet.

### [Tensile Strength]

The plated steel sheet of the present embodiment has a tensile strength of 780 MPa or more. The present embodiment suppresses LME occurring in high strength steel sheet, therefore the plated steel sheet according to the present embodiment is high in strength. Specifically, it has a 780 MPa or more tensile strength. The upper limit of the tensile strength is not particularly prescribed, but from the viewpoint of securing toughness, may for example be 2000 MPa or less. The tensile strength is measured by taking a JIS No. 5 tensile test piece having a direction perpendicular to the rolling direction as its longitudinal direction and performing a test based on JIS Z 2241: 2011. The tensile strength may also be 980 MPa or more or 1180 MPa or more.

### [Chemical Composition of Steel Sheet]

Below, the chemical composition of the steel sheet forming part of the plated steel sheet of the present embodiment will be explained. Below, the "%" relating to the chemical composition of the steel sheet shall mean "mass%". Further, in the numerical ranges in the chemical composition, a numerical range expressed using "to" will mean a range including the numerical values before and after the "to" as an upper limit value and a lower limit value.

### (C: 0.05 to 0.40%)

C (carbon) is an element securing the strength of steel. To obtain the 780 MPa or more of tensile strength targeted by the present embodiment, the content of C is 0.05% or more. To prevent the C concentration of the surface layer explained later from becoming too high and considering the weldability, the content of C is 0.40% or less. The content of C may also be 0.08% or more, 0.10% or more, 0.15% or more. The content of C may also be 0.37% or less, 0.35% or less, or 0.30% or less.

### (Si: 0.7 to 3.0%)

Si (silicon), by addition combined with Al (aluminum), is an element promoting ferrite stabilization and decarburization. In the past, it had been known that by adding Si into steel, the LME resistance is lowered, but as a result of studies by the inventors, contrary to the conventional findings, it was discovered that by making both Si and Al be included in large amounts, the LME resistance is improved. This is believed to be because the later explained heat treatment enables decarburization of the surface layer part to progress and the ferrite of the surface layer part to stabilize, whereby the effect of improvement of the LME resistance due to decarburization and stabilization of ferrite becomes greater than the decrease in the LME resistance due to Si. To obtain this effect, the content of Si is 0.7% or more. If the content of Si is too great, even if applying high dew point annealing, external oxidation progresses, oxides (scale) are formed on the surface layer of the steel sheet, conversely decarburization is suppressed at the outermost surface, and the effect of improvement of the LME resistance becomes smaller. Considering this point, the content of Si is 3.0% or less. The content of Si may also be 0.8% or more, 0.9% or more, or 1.0% or more. The content of Si may also be 2.5% or less, 2.0% or less, or 1.5% or less.

### (Mn: 0.1 to 5.0%)

Mn (manganese) is an element effective for obtaining hard structures and improving the strength of the steel. Considering the strength of the steel, the content of Mn is 0.1% or more. Further, considering the drop in formability due to Mn segregation, the content of Mn is 5.0% or less. The content of Mn may also be 0.5% or more, 1.0% or more, or 1.5% or more. The content of Mn may also be 4.5% or less, 4.0% or less, or 3.5% or less.

### (Sol. Al: 0.5 to 2.0%)

Al (aluminum) is an element which, by addition combined with Si (silicon), dissolves in the steel and, like Si, promotes ferrite stabilization and decarburization. "sol. Al" means acid soluble Al not forming Al₂O₃ or other oxides and able to be dissolved by acid. It is found as Al measured after deducting the insoluble residue on the filter paper formed in the process of analysis of Al. To obtain this effect, the content of sol. Al is made 0.5% or more. If the content of sol. Al is too great, even if applying high dew point annealing, external oxidation progresses, oxides (scale) are formed at the surface layer of the steel sheet, conversely decarburization at the outermost surface is suppressed, and the effect of improvement of the LME resistance becomes smaller. Considering this point, the content of sol. Al is 3.0% or less. The content of sol. Al may also be 0.6% or more, 0.7% or more, 0.8% or more, or 1.0% or more. The content of sol. Al may also be 1.8% or less, 1.6% or less, or 1.5% or less.

### (Si+Sol. Al: 1.3% or More)

To obtain the above-mentioned such effect of improvement of the LME resistance, the contents of Si and sol. Al are a total of 1.3% or more. To raise the contents of the metal Si and metal Al dissolved in the ferrite phase explained later, the contents of Si and sol. Al are a total of 1.3% or more. The total of the contents of Si and sol. Al may also be 1.4% or more, 1.5% or more, 1.6% or more, 1.8% or more, or 2.0% or more. The upper limit of the contents of Si and sol. Al may be the total of the upper limits of the content of Si and content of sol. Al explained above.

### (P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0. From the viewpoint of the dephosphorization cost, the content of P may be more than 0%, 0.0001% or more, or 0.0005% or more.

### (S: 0.0300% or Less)

S (sulfur) is an impurity generally contained in steel. If the content of S is more than 0.0300%, the weldability is liable to fall and further the amount of precipitation of MnS is liable to increase and the bendability and other formability to fall. Therefore, the content of S is 0.0300% or less. The content of S may also be 0.0100% or less, 0.0050% or less, or 0.0020% or less. S is preferably not contained. The lower limit of the content of S is 0. From the viewpoint of the desulfurization cost, the content of S may be more than 0%, 0.0001% or more, or 0.0005% or more.

### (N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0. From the viewpoint of the production cost, the content of N may be more than 0%, 0.0005% or more, or 0.0010% or more.

### (B: 0 to 0.0100%)

B (boron) is an element raising the hardenability to contribute to the improvement of strength and, further, segregating at the grain boundaries to strength the grain boundaries and improve the toughness, therefore may be contained in accordance with need. It is not an essential element, therefore the lower limit of the content of B is 0. This effect is obtained even with a trace amount of content, but if contained, the content of B is preferably 0.0001% or more. Further, from the viewpoint of securing the toughness, the content of B is 0.0100% or less. The content of B may also be 0.0002% or more, 0.0003% or more, or 0.0005% or more. The content of B may also be 0.0090% or less, 0.0080% or less, 0.0060% or less, 0.0040% or less, 0.0035% or less, 0.0030% or less, or 0.0020% or less.

### (Ti: 0 to 0.1500%)

Ti (titanium) is an element precipitating as TiC during cooling of steel and contributing to improvement of the strength, therefore may be contained in accordance with need. It is not an essential element, therefore the lower limit of the content of Ti is 0. This effect is obtained even with a trace amount of content, but if contained, the content of Ti is preferably 0.0001% or more. On the other hand, if excessively contained, coarse TiN is formed and the toughness is liable to be impaired, therefore the content of Ti is 0.0002% or more, 0.0003% or more, 0.0004% or more, or 0.0005% or more. The content of Ti is 0.1500% or less. The content of Ti may also be 0.1200% or less, 0.1000% or less, 0.0500% or less, 0.0300% or less, 0.0150% or less, 0.0100% or less, 0.0050% or less, 0.0030% or less, or 0.0020% or less.

### (Nb: 0 to 0.150%)

Nb (niobium) is an element contributing to improvement of strength through improvement of the hardenability, therefore may be contained in accordance with need. It is not an essential element, therefore the lower limit of the content of Nb is 0. This effect is obtained even with a trace amount of content, but if contained, the content of Nb is preferably 0.001% or more. On the other hand, from the viewpoint of securing the toughness, the content of Nb is 0.150% or less. The content of Nb may also be 0.002% or more, 0.003% or more, 0.005% or more, 0.007% or more, or 0.010% or more. The content of Nb may also be 0.120% or less, 0.100% or less, 0.060% or less, 0.050% or less, 0.030% or less, or 0.020% or less.

### (V: 0 to 0.150%)

V (vanadium) is an element contributing to improvement of strength through improvement of the hardenability, therefore may be contained in accordance with need. It is not an essential element, therefore the lower limit of the content of V is 0. This effect is obtained even with a trace amount of content, but if contained, the content of V is preferably 0.001% or more. On the other hand, from the viewpoint of securing the toughness, the content of V is 0.150% or less. The content of V may also be 0.002% or more, 0.003% or more, 0.005% or more, or 0.008% or more. The content of V may also be 0.120% or less, 0.100% or less, 0.060% or less, 0.050% or less, 0.040% or less, or 0.030% or less, or 0.020% or less.

### (Cr: 0 to 2.00%)

Cr (chromium) is effective for raising the hardenability of steel to raise the strength of the steel, therefore may be contained in accordance with need. It is not an essential element, therefore the lower limit of the content of Cr is 0. This effect is obtained even with a trace amount of content, but if contained, the content of Cr is preferably 0.01% or more. On the other hand, if excessively contained, Cr carbides are formed in large amounts and conversely the hardenability is liable to be impaired, therefore the content of Cr is 2.00% or less. The content of Cr may also be 0.02% or more, 0.04% or more, 0.05% or more, 0.07% or more, or 0.10% or more. The content of Cr may also be 1.80% or less, 1.50% or less, 1.20% or less, 0.80% or less, 0.60% or less, 0.50% or less, 0.30% or less, or 0.20% or less.

### (Ni: 0 to 2.00%)

Ni (nickel) is effective for raising the hardenability of steel to raise the strength of the steel, therefore may be contained in accordance with need. It is not an essential element, therefore the lower limit of the content of Ni is 0. This effect is obtained even with a trace amount of content, but if contained, the content of Ni is preferably 0.001% or more. On the other hand, excessive addition of Ni causes the costs to rise, therefore the content of Ni may also be 2.00% or less. The content of Ni is 0.02% or more, 0.03% or more, 0.04% or more, or 0.05% or more. The of Ni may also be 1.80% or less, 1.50% or less, 1.20% or less, 0.80% or less, 0.60% or less, 0.50% or less, 0.40% or less, 0.20% or less, or 0.15% or less.

### (Cu: 0 to 2.0000%)

Cu (copper) is effective for raising the hardenability of steel to raise the strength of the steel, therefore may be contained in accordance with need. It is not an essential element, therefore the lower limit of the content of Cu is 0. This effect is obtained even with a trace amount of content, but if contained, the content of Cu is preferably 0.0001% or more. On the other hand, from the viewpoint of suppression of a drop in toughness or cracking of the slab after casting or a drop in weldability, the content of Cu is 2.0000% or less. The content of Cu may also be 0.0002% or more, 0.0004% or more, or 0.0005% or more. The content of Cu may also be 1.8000% or less, 1.5000% or less, 1.2000% or less, 0.8000% or less, 0.6000% or less, 0.4000% or less, 0.2000% or less, 0.1000% or less, 0.0070% or less, 0.0050% or less, 0.0035% or less, 0.0020% or less, or 0.0015% or less.

### (Mo: 0 to 1.00%)

Mo (molybdenum) is effective for raising the hardenability of steel to raise the strength of the steel, therefore may be contained in accordance with need. It is not an essential element, therefore the lower limit of the content of Mo is 0. This effect is obtained even with a trace amount of content, but if contained, the content of Mo is preferably 0.01% or more. On the other hand, from the viewpoint of suppressing a drop in toughness, the content of Mo is 1.00% or less. The content of Mo may also be 0.02% or more, 0.03% or more, 0.05% or more, or 0.06% or more. The content of Mo may also be 0.90% or less, 0.80% or less, 0.60% or less, 0.40% or less, 0.30% or less, or 0.20% or less.

### (W: 0 to 1.000%)

W (tungsten) is effective for raising the hardenability of steel to raise the strength of the steel, therefore may be contained in accordance with need. It is not an essential element, therefore the lower limit of the content of W is 0. This effect is obtained even with a trace amount of content, but if contained, the content of W is preferably 0.001% or more. On the other hand, from the viewpoint of suppressing a drop in toughness, the content of W is 1.000% or less. The content of W may also be 0.002% or more or 0.003% or more. The content of W may also be 0.900% or less, 0.800% or less, 0.600% or less, 0.400% or less, 0.300% or less, 0.200% or less, 0.100% or less, 0.050% or less, 0.030% or less, 0.020% or less, 0.015% or less, or 0.010% or less.

### (Ca: 0 to 0.1000%)

Ca (calcium) is an element contributing to the control of inclusions, in particular the fine dispersion of inclusions, and having the action of raising the toughness, therefore may be contained in accordance with need. It is not an essential element, therefore the lower limit of the content of Ca is 0. This effect is obtained even with a trace amount of content, but if contained, the content of Ca is preferably 0.0001% or more. On the other hand, excessive inclusion causes deterioration of the surface properties to surface in some cases, therefore the content of Ca is 0.1000% or less. The content of Ca may also be 0.0002% or more or 0.0003% or more. The content of Ca may also be 0.0900% or less, 0.0800% or less, 0.0600% or less, 0.0500% or less, 0.0400% or less, 0.0300% or less, 0.0200% or less, 0.0100% or less, 0.0050% or less, 0.0025% or less, 0.0015% or less, or 0.0010% or less.

### (Mg: 0 to 0.100%)

Mg (magnesium) is an element contributing to the control of inclusions, in particular the fine dispersion of inclusions, and having the action of raising the toughness, therefore may be contained in accordance with need. It is not an essential element, therefore the lower limit of the content of Mg is 0. This effect is obtained even with a trace amount of content, but if contained, the content of Mg is preferably 0.0001% or more. On the other hand, excessive inclusion causes deterioration of the surface properties to surface in some cases, therefore the content of Mg is 0.100% or less. The content of Mg may also be 0.0003% or more, 0.0005% or more, or 0.0008% or more. The content of Mg may also be 0.090% or less, 0.080% or less, 0.060% or less, 0.040% or less, 0.030% or less, 0.020% or less, 0.010% or less, 0.005% or less, 0.003% or less, or 0.002% or less.

### (Zr: 0 to 0.100%)

Zr (zirconium) is an element contributing to the control of inclusions, in particular the fine dispersion of inclusions, and having the action of raising the toughness, therefore may be contained in accordance with need. It is not an essential element, therefore the lower limit of the content of Zr is 0. This effect is obtained even with a trace amount of content, but if contained, the content of Zr is preferably 0.001 % or more. On the other hand, excessive inclusion causes deterioration of the surface properties to surface in some cases, therefore the content of Zr is 0.100% or less. The content of Zr may also be 0.003% or more, 0.005% or more, 0.008% or more, or 0.010% or more. The content of Zr may also be 0.090% or less, 0.080% or less, 0.060% or less, 0.050% or less, 0.040% or less, or 0.030% or less.

### (Hf: 0 to 0.100%)

Hf (hafnium)is an element contributing to the control of inclusions, in particular the fine dispersion of inclusions, and having the action of raising the toughness, therefore may be contained in accordance with need. It is not an essential element, therefore the lower limit of the content of Hf is 0. This effect is obtained even with a trace amount of content, but if contained, the content of Hf is preferably 0.0001% or more. On the other hand, excessive inclusion causes deterioration of the surface properties to surface in some cases, therefore the content of Hf is 0.100% or less. The content of Hf may also be 0.0002% or more, 0.0003% or more, 0.0005% or more, or 0.0008% or more. The content of Hf may also be 0.090% or less, 0.080% or less, 0.060% or less, 0.050% or less, 0.030% or less, 0.020% or less, 0.010% or less, 0.005% or less, 0.003% or less, or 0.002% or less.

### (REM: 0 to 0.1000%)

A REM (rare earth element) is an element contributing to control of inclusions, in particular to finely dispersing inclusions, and having the action of raising the toughness, therefore may be contained in accordance with need. It is not an essential element, therefore the lower limit of the content of a REM is 0%. This effect is obtained even when contained in a trace amount, but if contained, the content of a REM is preferably 0.0001% or more. On the other hand, excessive inclusion causes deterioration of the surface properties to surface in some cases, therefore the content of a REM is 0.1000% or less. The content of a REM may also be 0.0003% or more, 0.0004% or more, or 0.0005% or more. The content of a REM may also be 0.0900% or less, 0.0800% or less, 0.0600% or less, 0.0500% or less, 0.0400% or less, 0.0300% or less, 0.0200% or less, 0.0100% or less, 0.0050% or less, or 0.0020% or less. Note that "REM" is an abbreviation for a rare earth metal and means an element belonging to the lanthanoids. A REM is usually added as a misch metal.

In the steel sheet according to the present embodiment, the balance beside the above chemical composition is comprised of Fe and impurities. Here, "impurities" are constituents entering due to various factors in the production process such as the ore, scraps, and other such starting materials when industrially producing steel sheet and not having a detrimental effect on the LME cracking of the steel sheet according to the present embodiment. That is, they mean constituents contained in a range giving the LME resistance sought in the steel sheet of the present embodiment. As a specific element, for example, O (oxygen) may be mentioned. The content of O contained as an impurity may also be 0.0500% or less, 0.0300% or less, 0.0200% or less, or 0.0100% or less. However, from the viewpoint of the production costs, the lower limit of the O content may be 0.00001%, 0.00005%, or 0.0001%.

The chemical composition of the steel sheet may be analyzed using an elemental analysis method known to persons skilled in the art. For example, it is analyzed by inductively coupled plasma - mass spectrometry (ICP-MS method). However, C and S may be measured using the combustion-infrared absorption method, while N can be measured using the inert gas melting-thermal conductivity method. For O, the inert gas melting-infrared absorption method is used. These analyses may be performed on a sample taken from the steel sheet by a method based on JIS G0417: 1999.

### [Plating Layer]

The plated steel sheet of the present embodiment is comprised of the above-mentioned sheet steel on which a plating layer is provided. The plating layer may be formed on one surface of the steel sheet or may be formed on both surfaces. The plated steel sheet of the present embodiment is mainly used in the automobile field. The plating is not particularly limited so long as a Zn-based plating containing Zn. As elements other than Zn, for example, Fe, Al, Mg, Si, Ni, Sn, and other elements generally contained in a Zn plating may be contained. Further, the elements contained in steel sheet may be diffused and may be contained in the plating. The content of Zn may be 50% or more or may be 55% or more or 60% or more.

### [Chemical Composition of Plating Layer]

Below, one example of the chemical composition of the plated steel sheet of the present embodiment will be explained. The "%" relating to the content of the elements unless otherwise indicated means "mass%". Further, in the numerical ranges in the chemical composition regarding the plating layer, a numerical range expressed using "to" unless otherwise indicated will mean a range including the numerical values before and after the "to" as an upper limit value and a lower limit value.

### (Fe: 0 to 3.0%)

Fe may be contained in the plating layer by diffusion from the steel sheet if heat treating the plated steel sheet after forming a plating layer containing Zn on steel sheet. The content of Fe may also be 0%. Further, the content of Fe is 3.0% or less. The content of Fe may also be 2.0% or less or 1.0% or less.

### (Al: 0 to 30.0%)

Al is an element which, by addition combined with Zn, improves the corrosion resistance of the plating layer, therefore may be contained in accordance with need. The content of Al may also be 0%. To form a plating layer containing Zn and Al, the content of Al is preferably 0.01% or more. If the content of Al becomes too great, the effect of improvement of the corrosion resistance becomes saturated, therefore the content of Al is 30.0% or less. The content of Al may also be 1.0% or more, 3.0% or more, 5.0% or more, 10.0% or more, or 15.0% or more. The content of Al may also be 25.0% or less or 20.0% or less.

### (Mg: 0 to 10.0%)

Mg is an element which, by addition combined with Zn and Al, improves the corrosion resistance of the plating layer, therefore may be contained in accordance with need. The content of Mg may also be 0%. To form a plating layer containing Zn, Al, and Mg, the content of Mg is preferably 0.01% or more. If the content of Mg becomes too great, poor appearance and nonplating defect sometimes occur, therefore the content of Mg is 10.0% or less. The content of Mg may also be 1.0% or more, 2.0% or more, 3.0% or more, 4.5% or more, or 5.0% or more. The content of Mg may also be 8.0% or less or 6.0% or less.

In one example of the chemical composition of a plating suitable for the plated steel sheet of the present embodiment, the balance besides the above constituents is comprised of Zn and impurities. The "impurities" in the plating layer mean constituents entering due to various factors in the production process such as the starting materials when producing the plating layer and not constituents intentionally added to the plating layer. For example, when elements other than the Zn, Fe, Al, and Mg contained in the steel sheet diffuse and are contained in the plating layer, they correspond to impurities. In one example of the chemical composition of the plating suitable for the plated steel sheet of the present embodiment, as impurities, elements other than the basic constituents and optionally added constituents explained above may also be contained in trace amounts in a range not obstructing the effects of the present embodiment.

The chemical composition of the plating layer can be determined by dissolving the plating layer in an acid solution to which an inhibitor suppressing corrosion of steel sheet has been added and measuring the obtained solution by ICP (high frequency inductively coupled plasma) spectrometry. As the acid solution to which an inhibitor has been added for dissolving the plating, for example, a 10 mass% hydrochloric acid solution to which 0.06 mass% inhibitor (ibit 710K made by Asahi Chemical Co., Ltd.) has been added may be used.

The thickness of the plating layer may for example be 3 to 50 µm. Further, the amount of deposition of the plating layer is not particularly limited, but for example may be 10 to 170 g/m² per surface. In the present invention, the amount of deposition of the plating layer is determined by dissolving the plating layer in an acid solution to which an inhibitor for suppressing corrosion of the base material steel sheet has been added and finding the change in weight before and after the plating layer is pickled and peeled off. After removing the plating layer, the steel sheet is rinsed and dried. The thickness of the plating layer may be 5 µm or more, 7 µm or more, or 10 µm or more. The thickness of the plating layer may also be 45 µm or less, 40 µm or less, 35 µm or less, 30 µm or less. The amount of deposition of the plating layer may be 15 g/m² or more, 20 g/m² or more, 25 g/m² or more, or 30 g/m² or more per surface. The amount of deposition of the plating layer may also be 160 g/m² or less, 140 g/m² or less, 120 g/m² or less, or 100 g/m² or less per surface.

### [Surface Layer Part]

Next, the surface layer part of the plated steel sheet will be explained.

### (C Concentration of Surface Layer)

In the plated steel sheet of the present embodiment, the depth with a C concentration of 0.05% or less measured by GDS (glow discharge optical emission spectrometry) in the thickness direction of the steel sheet from the interface of the steel sheet and plating layer is 8 µm or more.

The sensitivity to LME falls if the C concentration becomes lower, therefore the LME resistance is improved due to the C concentration of the surface layer being low. Further, C is an austenite stabilizing element, therefore by this being low, the layer with a low LME sensitivity, explained later, stabilizes.

Such a surface layer structure can be obtained by making the chemical composition of the steel sheet as explained before and performing the later explained pretreatment and heat treatment.

If the depth with a C concentration of 0.05% or less is 8 µm or more, the effect of improvement of the LME resistance is obtained, therefore the upper limit of the depth with a C concentration of 0.05% or less is not particularly prescribed. The depth with a C concentration of 0.05% or less may for example be 50 µm or less, 40 µm or less, or 30 µm or less. The depth with a C concentration of 0.02% or less is preferably 10 µm or more, more preferably 12 µm or more, still more preferably 15 µm or more or 20 µm or more.

The GDS measurement is performed at five measurement points in the sheet thickness direction. The average value of these is made the C concentration. The measurement conditions are as follows:
Apparatus: high frequency glow discharge optical emission spectrometry apparatus (made by LECO Japan Corporation, Model Name "GDS850A"
Ar gas pressure: 0.3 MPa
Anode diameter: 4 mmφ
RF output: 30W
Measurement time: 200 to 1500 seconds

Note that the interface of the steel sheet and the plating layer is prescribed in the present embodiment as the point where the content of Fe found by GDS measurement becomes 93% of the content of Fe at the depth of 150 µm.

### (High Ferrite Layer)

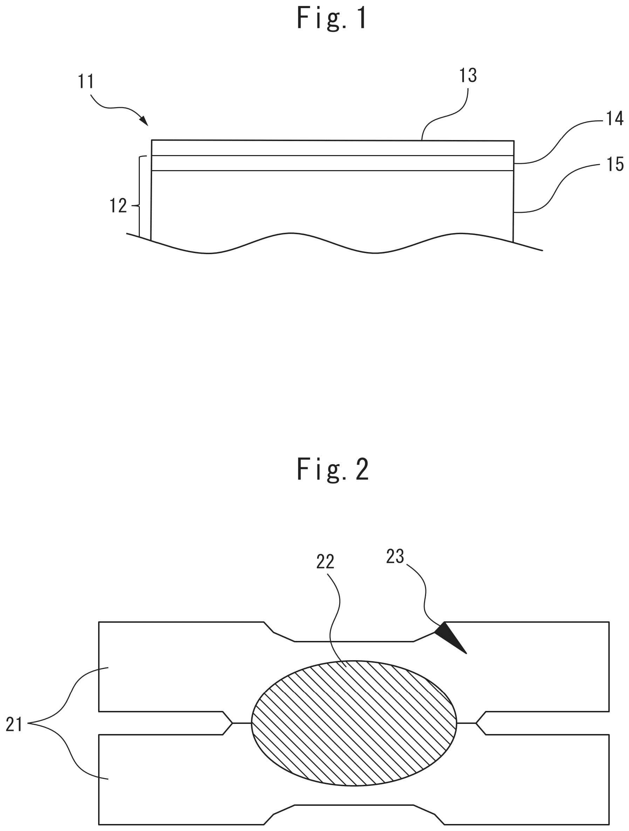

In the plated steel sheet of the present embodiment, the thickness of the layer with an area ratio of the ferrite phase of 90% or more (below, referred to as the "high ferrite layer") in the thickness direction of the steel sheet from the interface of the steel sheet and plating layer is 8 µm or more. FIG. 1 shows a schematic view of the vicinity of the surface layer of the steel sheet of the present embodiment. FIG. 1 is a cross-section of the plated steel sheet 11 in the thickness direction. The top side is the surface of the plated steel sheet 11. In FIG. 1, the plated steel sheet 11 is provided with a steel sheet 12 and a plating layer 13 with a thickness of, for example, 3 to 50 µm. The high ferrite layer 14 is positioned at the surface layer part of the steel sheet 12 (interface side with plating layer 13) and has a 8 µm or more thickness. The inside 15 of the steel sheet is a structure mainly comprised of martensite and containing ferrite.

If the thickness of the high ferrite layer becomes 8 µm or more, the effect of improvement of the LME resistance is obtained, therefore the upper limit of the thickness is not particular prescribed. For example, it may be 100 µm or less, 80 µm or less, 60 µm or less, or 40 µm or less. The thickness of the high ferrite layer is preferably 10 µm or more, more preferably 12 µm or more, still more preferably 15 µm or more, 20 µm or more, or 25 µm or more.

The structure besides the ferrite in the high ferrite layer is not limited. For example, it can be made any one or more of martensite, bainite, and cementite.

The thickness of the high ferrite layer is found by etching the sheet cross-section of the steel sheet by Nital, examining it by a SEM by a power of 1000X, and differentiating hard structures containing relatively large amounts of martensite, bainite, etc. and cementite and ferrite from the forms of the structures. The thickness of the high ferrite layer is measured over a range of 500 µm in a direction vertical to the thickness direction at five measurement locations at intervals of 1000 µm in the direction vertical to the thickness direction and the average value is taken. Here, the area ratio of ferrite means the area ratio found by examining the above thickness cross-section. If examining a local location in the middle of the thickness direction, even for example in a location with an area ratio of ferrite of less than 90%, there is no problem if the area ratio of ferrite is 90% or more at a thickness cross-section of a depth from the surface down to 8 µm.

The ferrite area ratio is found by cutting out a section of the steel sheet in the thickness direction perpendicular to the rolling direction, polishing it to a mirror surface, bringing out the steel structure by a Nital reagent, and obtaining a secondary electron image using a field emission type scanning electron microscope. The examination apparatus examines a range of 500 µm from the interface of the steel sheet or the interface of the plating layer and the steel sheet at five fields at equal intervals. The ratios of the different structures are calculated for the obtained structural photographs by the point counting method. More specifically, first an equal spacing lattice is drawn on the structural photograph. Next, it is judged which of tempered martensite, pearlite, ferrite, fresh martensite, or retained austenite or bainite the structures at the lattice points correspond to. By finding the numbers of lattice points corresponding to the structures and dividing them by the total number of lattice points, it is possible to measure the ratios of the structures. The greater the total number of lattice points, the more accurate it becomes to find the volume ratio. In the present embodiment, the lattice spacing is made 2 µm×2 µm and the total number of lattice points is 1500 points.

The judgment criteria for tempered martensite, pearlite, ferrite, fresh martensite, or retained austenite or bainite are shown below. A region having substructures (lath boundaries and block boundaries) in the grains and having carbides precipitated with several variants is judged as tempered martensite. Further, a region having cementite precipitated in a lamellar form is judged as pearlite. A region having a small brightness and not having substructures observed is judged as ferrite. A region having a large brightness and not having substructures appearing by etching is judged as fresh martensite or retained austenite. A region not corresponding to any of the above is judged as bainite. For simplicity, the area ratio of the ferrite phase can be found if differentiating the ferrite from other structures.

### (Metal Si and Metal Al in Ferrite Phase)

In the ferrite phase in the high ferrite layer, metal Si and metal Al are dissolved in a total of 0.3% or more at positions of 4 µm in the thickness direction of the steel sheet from the interface of the steel sheet and plating layer. Due to this, the ferrite phase stabilizes and transformation to an austenite phase with high LME sensitivity becomes difficult even due to the heat of spot welding, Ferrite is low in LME sensitivity, therefore suppression of transformation to austenite at the time of welding is preferable from the viewpoint of improvement of the LME resistance. Such a surface layer structure can be obtained by making the chemical composition of the steel sheet the one explained above and by the later explained pretreatment and heat treatment. The contents of metal Si and metal Al dissolved in the ferrite phase may also be 0.4% or more, 0.5% or more, or 0.6% or more.

The amount of metal Si dissolved in the ferrite phase is calculated by using an X-ray photoelectron spectrometer to find the ratio of the peak area intensity of Si(Si-Si,Fe-Si) with respect to Si(SiOₓ)+Si(Si-Si,Fe-Si) and multiplying the content of Si in the steel at a position of 4 µm in the thickness direction of the steel sheet from the interface of the steel sheet and plating layer. Note that this Si content can be measured by the previously explained GDS. Further, the Al amount dissolved in the ferrite phase is found as the Al measured after deducting the insoluble residue on the filter paper occurring in the process of analysis of Al.

Further, preferably the amounts of metal Si and metal Al dissolved in the ferrite phase are measured by TEM-EDS in the following way.

First, as a sample for observation under a TEM, a thin film sample is prepared having a thickness cross-section of a steel sheet vertical to the L-direction (rolling direction) as an observed surface by the FIB (focused ion beam) method. For preparation of a thin film sample, an NB5000 made by Hitachi High-Technology is used. The acceleration voltage at the time of processing is made 5 to 40 kV. Note that, 10 kV or less is used for the finishing. The outermost surface of the sample has C vapor deposited on it for protection. For the mesh, a Mo mesh is used.

Next, the prepared sample is observed by a transmission electron microscope (TEM). TEM-EDS (energy dispersive X-ray spectroscopy) is used for line analysis along positions 4 µm from the steel sheet surface. Quantitative analysis is performed at any 10 points. The elements which are quantitatively analyzed are Fe, Si, Al, Mn, and O. That is, the ratios of metal Si and metal Al in the ferrite phase in the present invention respectively mean the ratios of Si and Al in the total concentration of Fe, Si, Al, Mn, and O in the ferrite phase. The concentration is made the average value of the measurement results at 10 points. Here, if the O concentration was 5% or more, it is judged that the structure at the analyzed position was an internal oxide. The analysis is conducted at 10 points with an O concentration of less than 5% not including the measurement points.

As the TEM, a JEM-2100F made by JEOL can be used. The observation acceleration voltage is 200 kV. As the EDS, it is possible to use a JED-2300T made by JEOL. The analysis acceleration voltage is 200 kV.

### [Sheet Thickness]

The thickness of the plated steel sheet of the present embodiment is not particularly limited. For example, it may be 0.6 to 3.2 mm. The thickness may also be 0.8 mm or more or 1.0 mm or more. The thickness may also be 3.0 mm or less, 2.6 mm or less, 2.5 mm or less, 2.4 mm or less, 2.2 mm or less, 2.0 mm or less, or 1.8 mm or less.

### <<Method of Production>>

Next, the method of production of the steel sheet according to the present embodiment will be explained.

The steel sheet according to the present embodiment can be obtained by, for example, a method of production comprising a casting step of casting molten steel adjusted in chemical composition to form a steel slab, a hot rolling step of hot rolling the steel slab to obtain hot rolled steel sheet, a coiling step of coiling up the hot rolled steel sheet, a cold rolling step of cold rolling the coiled up hot rolled steel sheet to obtain cold rolled steel sheet, a pretreatment step of brush grinding the cold rolled steel sheet, and an annealing step of annealing the pretreated cold rolled steel sheet. Alternatively, after the hot rolling step, the hot rolled steel sheet need not be coiled, but may be pickled then cold rolled as it is.

### <Casting Step>

The conditions of the casting step are not particularly limited. For example, after smelting by a blast furnace, electric furnace, etc., various types of secondary refining may be performed, then the usual continuous casting, casting by ingot method, or other method may be used for casting.

### <Hot Rolling Step>

The steel slab obtained by casting can be hot rolled to obtain hot rolled steel sheet. The hot rolling step is performed by hot rolling the cast steel slab directly or after cooling once, then reheating it. If reheating, the heating temperature of the steel slab may, for example, be 1100 to 1250°C. In the hot rolling step, usually rough rolling and finish rolling are performed. The temperature and reduction rate of each rolling may be suitably changed in accordance with the desired microstructure or sheet thickness. For example, the end temperature of the finish rolling may be 900 to 1050°C and the rolling reduction of the finish rolling may be 10 to 50%.

### <Coiling Step>

The hot rolled steel sheet can be coiled at a predetermined temperature. The coiling temperature may be suitably changed in accordance with the desired microstructure etc. For example, it may be 500 to 800°C. Before coiling or after coiling, then uncoiling, the hot rolled steel sheet may be subjected to predetermined heat treatment. Alternatively, the coiling step need not be performed and the hot rolled steel sheet can be pickled after the hot rolling step and the later explained cold rolling performed.

### <Cold Rolling Step>

After pickling the hot rolled steel sheet, the hot rolled steel sheet can be cold rolled to obtain cold rolled steel sheet. The reduction rate of the cold rolling may be suitably changed in accordance with the desired microstructure or sheet thickness. For example, it may be 20 to 80%. After the cold rolling step, for example, the steel sheet may be air cooled down to room temperature for cooling.

### <Pretreatment Step>

To obtain a surface layer structure of steel sheet such as explained above, the predetermined pretreatment must be performed followed by annealing.

"Pretreatment" includes grinding the surface of the cold rolled steel sheet using a grinding brush (brush grinding). As the grinding brush used, for example, M-33 made by Hotani may be mentioned. Due to this, it is possible to introduce strain in the surface layer of the sheet. At the time of grinding, the steel sheet surface may be coated with a 1.0 to 5.0%NaOH aqueous solution. The brush rolling reduction may be 0.5 to 10.0 mm and the rotational speed may be 100 to 1000 rpm. By controlling such coating solution conditions, brush rolling reduction, and rotational speed to perform brush grinding, in the later explained annealing step, decarburization is promoted and a structure stabilized in ferrite can be formed on the surface layer of the steel sheet.

Note that, the smaller the roughness of the steel sheet after the pretreatment step, the smaller the stress concentration and the more improved the LME resistance, therefore the smaller the roughness of the steel sheet after the pretreatment step, the more preferable. The asperity of the steel sheet surface is determined based on JIS B 0601: 2013 by randomly selecting 10 locations at the surface at the surface layer part side and measuring the surface profile at the respective locations by a contact type surface roughness meter. The surface roughnesses at the respective locations are arithmetically averaged to find the arithmetic average roughness Ra. The smaller the Ra, the more preferable. Less than 3.0 µm is preferable while 2.5 µm or less or 2.0 µm or less is more preferable.

### <Annealing Step>

The pretreated cold rolled steel sheet is annealed. In the present embodiment, the steel sheet given strain by pretreatment is held at a high dew point. Specifically, the holding temperature of the annealing step is 760 to 900°C to promote decarburization and internal oxidation. The holding temperature may be 770 to 870°C. If the holding temperature is low, decarburization and internal oxidation no longer progress, therefore the depth with a C concentration of 0.05% or less becomes shallow and the thickness of the high ferrite layer becomes thin. The holding temperature of the annealing step is 20 to 300 seconds. The holding time may be 50 to 200 seconds. The atmosphere is preferably a nonoxidizing atmosphere. For example, it may be N₂-1 to 10vol%H₂ or N₂-2 to 4vol%H₂. The rate of temperature rise up to the holding temperature is not particularly limited, but may be 1 to 10°C/s.

In the annealing step in the method of production of the plated steel sheet of the present embodiment, the dew point of the atmosphere is changed between the first half and second half of the holding time. The "first half of the holding time" means from the start of holding to the elapse of 40±1% of the holding time as a whole. In the first half of the holding time, the dew point of the annealing atmosphere is -20 to 20°C. Due to this, both decarburization of the surface layer and internal oxidation of the steel sheet progress. As a result, the Si and Al of the surface layer become oxides and the solute amounts of Si and Al decrease. If the dew point in the first half of the holding time is low, decarburization and internal oxidation no longer progress, therefore the depth with a C concentration of 0.05% or less becomes shallow and the thickness of the high ferrite layer becomes thin. If the dew point of the first half of the holding time is high, external oxidation progresses, decarburization is suppressed, the depth with a C concentration of 0.05% or less becomes shallower and the thickness of the high ferrite layer becomes thin. Further, if the ratio of the first half of the holding time to the holding time as a whole is large, Si and Al do not sufficiently diffuse from inside of the steel sheet to the surface layer side and the contents of the sol. Si and sol. Al in the ferrite phase become low.

After that, in the second half of the holding time after the elapse of 40±1% of the holding time, the dew point of the annealing atmosphere is -40 to -20°C. Further, the dew point in the second half becomes 10°C or more lower than the dew point of the first half. Due to this, only decarburization proceeds and Si and Al diffuse from the inside of the steel sheet to the surface side of the steel sheet. Due to this, Si and Al dissolved in the ferrite phase in the high ferrite layer increase. If the dew point of the second half of the holding time is low, decarburization no longer proceeds, therefore the depth with a C concentration of 0.05% or less becomes shallow and the thickness of the high ferrite layer becomes thin. If the dew point in the second half of the holding time is high, external oxidation progresses, decarburization is suppressed, the depth with a C concentration of 0.05% or less becomes shallow, and the thickness of the high ferrite layer becomes thin. Further, if the ratio of the second half of the holding time to the holding time as a whole is small, decarburization at the surface layer part does not progress, the depth with a C concentration of 0.05% or less becomes shallow, and the thickness of the high ferrite layer becomes thin. If the ratio of the first half of the holding time to the holding time as a whole is small, the ratio of the second half of the holding time to the holding time as a whole becomes relatively larger and, in the second half of the holding time, C diffuses from inside of the steel sheet to the surface, the layer decarburized at the surface layer in the first half of the holding time disappears, the depth with a C concentration of 0.05% or less becomes shallow, and the thickness of the high ferrite layer becomes thin.

The dew point during the first half of the holding time may be -15°C or more or -10°C or more. Further, the dew point during the first half of the holding time may be 15°C or less or 10°C or less. The dew point of the second half of the holding time may be -37°C or more or - 35°C or more. Further, the dew point of the second half of the holding time may be -22°C or less or -25°C or less.

By making the annealing conditions above such range, it is possible to promote decarburization and lower the C concentration of the surface layer and further to raise the ratio of the ferrite phase in which Si and Al are dissolved.

Annealing is for example performed in a state applying a 1 to 20 MPa tension. If applying tension at the time of annealing, it becomes possible to more effectively introduce strain in steel sheet. Decarburization of the surface layer is promoted.

The plated steel sheet according to the present embodiment can be obtained by plating the steel sheet produced as explained above to form a plating layer.

### <Plating Step>

The plating may be performed in accordance with a method known to persons skilled in the art. The plating, for example, may be performed by hot dip coating or may be performed by electroplating, vapor deposition plating, flame spraying, and cold spray. Preferably the plating is performed by hot dip coating. The conditions of the plating may be suitably set considering the chemical composition, thickness, amount of deposition, etc. of the desired plating layer.

The plated steel sheet according to the present embodiment is high strength and has a high LME resistance, therefore can be suitably used in a broad range of fields such as automobiles, household electrical appliance products, and building materials. In particular, use in the automobile field is preferable. Plated steel sheet used in automobiles is often spot welded. In that case, LME cracking can become a remarkable problem. For this reason, if using the plated steel sheet according to the present embodiment as steel sheet for automobiles, the effect of the present embodiment of having a high LME resistance is suitably manifested.

### EXAMPLES

Below, examples will be used to explain the present invention in more detail. The present invention is not limited to these examples.

### <Example No. 1>

Molten steel was smelted in a blast furnace and cast by continuous casting to obtain a steel slab having a chemical composition described in No. 1 of Table 1. The obtained steel slab was heated to 1200°C and hot rolled by an end temperature of finish rolling of 950°C and reduction rate of finish rolling of 30% to obtain hot rolled steel sheet. The obtained hot rolled steel sheet was coiled up by a coiling temperature of 650°C and pickled, then was cold rolled by a rolling reduction of 50% to obtain cold rolled steel sheet. The thickness of the cold rolled steel sheet was 1.6 mm.

Next, the cold rolled steel sheet was coated with an NaOH 2.0% aqueous solution and brush ground as pretreatment. The brush grinding was performed using an M-33 made by Hotani as a grinding brush by a brush rolling reduction of 2.0 mm and a speed of 600 rpm (condition "A" of Table 2).

After that, the steel sheet was annealed by a holding temperature of 800°C and holding time of 100 seconds inside of a furnace of an oxygen concentration of 20 ppm or less in a N₂-4vol%H₂ gas atmosphere to prepare a steel sheet sample. The rate of temperature rise at the time of annealing was made 6.0°C/s up to 500°C and 2.0°C/s from 500°C up to the holding temperature. The dew point of the annealing atmosphere was made 0°C up to 40 seconds in the first half of the holding time and -20°C in the 60 seconds in the second half. Further, the annealing was performed in a state applying 15 MPa tension.

Further, the annealed steel sheet was dipped in a 450°C hot dip galvanization bath (Zn-0.2%Al) for 3 seconds, then was pulled out by a 100 mm/s. The amount of plating deposition was controlled to 50 g/m² by N2 wiping gas to obtain plated steel sheet provided with a plating layer at both surfaces.

### <Example Nos. 2 to 38>

Except for making the chemical composition the one described in Table 1 and making the brush grinding conditions, annealing conditions, and plating conditions the ones described in Table 2, plated steel sheet was prepared under conditions similar to Ex. 1. In No. 37, for the brush grinding, the grinding brush D-100 made by Hotani was used (condition "B" of Table 2). D-100 is a brush with a higher grinding force compared with M-33. Note that in the type of plating in Table 2, "a" means Zn-0.2%Al and "b" means Zn-22%Al-8%Mg.

### (Surface Roughness After Brush Grinding)

When producing plated steel sheet, the hot rolled steel sheet after brush grinding was measured for surface roughness. The surface roughness was measured based on JIS B 0601: 2013 by randomly selecting 10 locations at the surface of the surface layer part side, measuring the surface profile at each of the locations by a contact type surface roughness meter, and arithmetically averaging the surface roughnesses at these locations to find the arithmetic average roughness Ra. The surface roughness after brush grinding is shown in Table 2 according to the following evaluation.

Evaluation AA: less than 2.0 µm
Evaluation A: 2.0 µm or more and less than 3.0 µm
Evaluation B: 3.0 µm or more

### [Table 1]

**Table 1**

| No. | Class | Chemical composition (mass%), balance: Fe and impurities | | | | | | | | | | |
|---|---|---|---|---|---|---|---|---|---|---|---|---|
| | | C | Si | Mn | sol. Al | P | S | N | B | Ti | Others | Si+sol. Al |
| 1 | Ex. | 0.05 | 0.7 | 2.0 | 0.6 | 0.0001 | 0.0006 | 0.0003 | | | | 1.3 |
| 2 | Ex. | 0.10 | 0.7 | 2.0 | 0.7 | 0.0080 | 0.0005 | 0.0003 | 0.0009 | 0.0002 | Hf: 0.001 | 1.4 |
| 3 | Ex. | 0.10 | 1.0 | 2.0 | 0.5 | 0.0080 | 0.0007 | 0.0002 | 0.0007 | 0.0007 | Hf: 0.001 | 1.5 |
| 4 | Ex. | 0.10 | 1.0 | 2.0 | 1.0 | 0.0070 | 0.0003 | 0.0007 | 0.0004 | 0.0001 | | 2.0 |
| 5 | Ex. | 0.10 | 0.8 | 2.2 | 0.5 | 0.0020 | 0.0007 | 0.0002 | 0.0004 | 0.0009 | | 1.3 |
| 6 | Ex. | 0.20 | 1.0 | 2.0 | 0.5 | 0.0100 | 0.0004 | 0.0001 | 0.0005 | 0.0003 | Mg: 0.001 | 1.5 |
| 7 | Ex. | 0.20 | 1.0 | 2.0 | 0.7 | 0.0020 | 0.0001 | 0.0009 | 0.0007 | 0.0007 | Zr: 0.015 | 1.7 |
| 8 | Ex. | 0.20 | 0.9 | 2.2 | 0.5 | 0.0008 | 0.0004 | 0.0006 | 0.0003 | 0.0008 | | 1.4 |
| 9 | Ex. | 0.20 | 1.0 | 2.5 | 0.7 | 0.0017 | 0.0006 | 0.0003 | 0.0002 | 0.0006 | Cr: 0.10 | 1.7 |
| 10 | Ex. | 0.20 | 1.0 | 2.3 | 1.0 | 0.0011 | 0.0009 | 0.0004 | 0.0008 | 0.0008 | Cu: 0.0007 | 2.0 |
| 11 | Ex. | 0.20 | 1.0 | 2.3 | 1.0 | 0.0031 | 0.0007 | 0.0005 | 0.0009 | 0.0007 | | 2.0 |
| 12 | Ex. | 0.20 | 1.0 | 2.2 | 1.0 | 0.0065 | 0.0010 | 0.0002 | 0.0003 | 0.0007 | Ni: 0.08 | 2.0 |
| 13 | Ex. | 0.25 | 1.0 | 2.2 | 1.0 | 0.0012 | 0.0002 | 0.0002 | 0.0008 | 0.0009 | Nb: 0.010 | 2.0 |
| 14 | Ex. | 0.25 | 0.7 | 2.2 | 0.6 | 0.0040 | 0.0005 | 0.0003 | 0.0008 | 0.0005 | V: 0.009 | 1.3 |
| 15 | Ex. | 0.25 | 0.7 | 2.2 | 0.6 | 0.0040 | 0.0005 | 0.0003 | 0.0008 | 0.0005 | V: 0.009 | 1.3 |
| 16 | Ex. | 0.30 | 1.0 | 5.0 | 1.0 | 0.0099 | 0.0002 | 0.0005 | 0.0008 | 0.0007 | | 2.0 |
| 17 | Ex. | 0.30 | 3.0 | 0.3 | 0.5 | 0.0110 | 0.0007 | 0.0009 | 0.0002 | 0.0002 | | 3.5 |
| 18 | Ex. | 0.35 | 1.0 | 3.0 | 1.5 | 0.0092 | 0.0003 | 0.0007 | 0.0010 | 0.0002 | Mo: 0.09 | 2.5 |
| 19 | Ex. | 0.35 | 1.0 | 2.2 | 1.0 | 0.0091 | 0.0002 | 0.0005 | 0.0006 | 0.0010 | REM: 0.0008 | 2.0 |
| 20 | Ex. | 0.40 | 0.7 | 2.2 | 2.0 | 0.0045 | 0.0004 | 0.0007 | 0.0008 | 0.0002 | | 2.7 |
| 21 | Ex. | 0.40 | 1.0 | 2.2 | 1.0 | 0.0035 | 0.0004 | 0.0005 | 0.0007 | 0.0001 | W: 0.005 | 2.0 |
| 22 | Ex. | 0.40 | 1.0 | 2.2 | 1.0 | 0.0082 | 0.0005 | 0.0008 | 0.0001 | 0.0003 | | 2.0 |
| 23 | Ex. | 0.40 | 1.0 | 2.2 | 1.0 | 0.0080 | 0.0005 | 0.0002 | 0.0002 | 0.0005 | Ca: 0.0005 | 2.0 |
| 24 | Comp. ex. | 0.44 | 1.0 | 2.0 | 0.5 | 0.0100 | 0.0007 | 0.0009 | 0.0007 | 0.0005 | | 1.5 |
| 25 | Comp. ex. | 0.20 | 0.5 | 2.0 | 1.0 | 0.0100 | 0.0008 | 0.0007 | 0.0008 | 0.0004 | | 1.5 |
| 26 | Comp. ex. | 0.20 | 3.1 | 2.0 | 0.5 | 0.0100 | 0.0007 | 0.0004 | 0.0007 | 0.0007 | | 3.6 |
| 27 | Comp. ex. | 0.20 | 1.0 | 2.0 | 0.3 | 0.0100 | 0.0006 | 0.0004 | 0.0003 | 0.0004 | | 1.3 |
| 28 | Comp. ex. | 0.20 | 1.0 | 2.0 | 2.1 | 0.0100 | 0.0005 | 0.0009 | 0.0005 | 0.0004 | | 3.1 |
| 29 | Comp. ex. | 0.20 | 0.7 | 2.0 | 0.5 | 0.0100 | 0.0004 | 0.0007 | 0.0006 | 0.0009 | | 1.2 |
| 30 | Comp. ex. | 0.20 | 1.0 | 2.0 | 1.0 | 0.0100 | 0.0005 | 0.0003 | 0.0004 | 0.0009 | | 2.0 |
| 31 | Comp. ex. | 0.20 | 1.0 | 2.0 | 1.0 | 0.0100 | 0.0008 | 0.0004 | 0.0005 | 0.0002 | | 2.0 |
| 32 | Comp. ex. | 0.20 | 1.0 | 2.0 | 1.0 | 0.0100 | 0.0005 | 0.0003 | 0.0004 | 0.0009 | | 2.0 |
| 33 | Comp. ex. | 0.20 | 1.0 | 2.0 | 1.0 | 0.0100 | 0.0008 | 0.0004 | 0.0005 | 0.0002 | | 2.0 |
| 34 | Comp. ex. | 0.20 | 1.0 | 2.0 | 1.0 | 0.0100 | 0.0007 | 0.0003 | 0.0001 | 0.0002 | | 2.0 |
| 35 | Comp. ex. | 0.20 | 1.0 | 2.0 | 1.0 | 0.0100 | 0.0003 | 0.0004 | 0.0007 | 0.0003 | | 2.0 |
| 36 | Comp. ex. | 0.20 | 1.0 | 2.0 | 1.0 | 0.0100 | 0.0003 | 0.0004 | 0.0007 | 0.0003 | | 2.0 |
| 37 | Comp. ex. | 0.20 | 1.0 | 2.0 | 1.0 | 0.0100 | 0.0010 | 0.0001 | 0.0008 | 0.0008 | | 2.0 |
| 38 | Comp. ex. | 0.20 | 1.0 | 2.0 | 1.0 | 0.0100 | 0.0010 | 0.0001 | 0.0008 | 0.0008 | | 2.0 |

| | | | | | | | | | | | | |
|---|---|---|---|---|---|---|---|---|---|---|---|---|
| *Underlines indicate outside scope of present invention. | | | | | | | | | | | | |

### [Table 2]

**Table 2**

| No. | Class | Pretreatment step | | Annealing step | | | | | | | | Plating type |
|---|---|---|---|---|---|---|---|---|---|---|---|---|
| | | Condition | Surface roughness after brush grinding | Holding temp. (°C) | Holding time total (s) | First half holding time (s) | First half holding time ratio (%) | First half dew point (°C) | Second half holding time (s) | Second half dew point (°C) | Second half dew point-first half dew point (°C) | |
| 1 | Ex. | A | A | 800 | 20 | 8 | 40 | 0 | 12 | -20 | -20 | a |
| 2 | Ex. | A | A | 800 | 50 | 20 | 40 | 10 | 30 | -40 | -50 | a |
| 3 | Ex. | A | A | 800 | 25 | 10 | 40 | 10 | 15 | -20 | -30 | a |
| 4 | Ex. | A | A | 820 | 75 | 30 | 40 | 10 | 45 | -40 | -50 | a |
| 5 | Ex. | A | AA | 840 | 100 | 40 | 40 | 10 | 60 | -40 | -50 | a |
| 6 | Ex. | A | AA | 860 | 100 | 40 | 40 | 10 | 60 | -40 | -50 | a |
| 7 | Ex. | A | AA | 860 | 100 | 40 | 40 | 10 | 60 | -40 | -50 | a |
| 8 | Ex. | A | A | 860 | 100 | 40 | 40 | 10 | 60 | -40 | -50 | a |
| 9 | Ex. | A | AA | 860 | 100 | 40 | 40 | 10 | 60 | -40 | -50 | a |
| 10 | Ex. | A | AA | 860 | 100 | 40 | 40 | 10 | 60 | -40 | -50 | a |
| 11 | Ex. | A | AA | 860 | 100 | 40 | 40 | 10 | 60 | -40 | -50 | a |
| 12 | Ex. | A | AA | 860 | 100 | 40 | 40 | 10 | 60 | -40 | -50 | a |
| 13 | Ex. | A | AA | 860 | 100 | 40 | 40 | 10 | 60 | -40 | -50 | a |
| 14 | Ex. | A | A | 860 | 25 | 10 | 40 | 0 | 15 | -20 | -20 | a |
| 15 | Ex. | A | A | 860 | 30 | 12 | 40 | 0 | 18 | -20 | -20 | b |
| 16 | Ex. | A | AA | 860 | 100 | 40 | 40 | 10 | 60 | -40 | -50 | a |
| 17 | Ex. | A | AA | 860 | 300 | 120 | 40 | 10 | 180 | -40 | -50 | a |
| 18 | Ex. | A | AA | 860 | 200 | 80 | 40 | 10 | 120 | -40 | -50 | a |
| 19 | Ex. | A | A | 860 | 200 | 80 | 40 | 10 | 120 | -40 | -50 | a |
| 20 | Ex. | A | AA | 860 | 200 | 80 | 40 | 10 | 120 | -40 | -50 | a |
| 21 | Ex. | A | AA | 860 | 200 | 80 | 40 | 10 | 120 | -40 | -50 | a |
| 22 | Ex. | A | AA | 860 | 200 | 80 | 40 | 10 | 120 | -40 | -50 | a |
| 23 | Ex. | A | AA | 860 | 200 | 80 | 40 | 10 | 120 | -40 | -50 | a |
| 24 | Comp. ex. | A | A | 800 | 50 | 20 | 40 | 0 | 30 | -40 | -40 | a |
| 25 | Comp. ex. | A | A | 800 | 50 | 20 | 40 | 0 | 30 | -40 | -40 | a |
| 26 | Comp. ex. | A | A | 800 | 50 | 20 | 40 | 0 | 30 | -40 | -40 | a |
| 27 | Comp. ex. | A | A | 800 | 50 | 20 | 40 | 0 | 30 | -40 | -40 | a |
| 28 | Comp. ex. | A | A | 800 | 50 | 20 | 40 | 0 | 30 | -40 | -40 | a |
| 29 | Comp. ex. | A | A | 800 | 50 | 20 | 40 | 0 | 30 | -40 | -40 | a |
| 30 | Comp. ex. | A | A | 800 | 50 | 20 | 40 | -30 | 30 | -40 | -10 | a |
| 31 | Comp. ex. | A | A | 800 | 50 | 20 | 40 | 30 | 30 | -40 | -70 | a |
| 32 | Comp. ex. | A | A | 800 | 50 | 20 | 40 | 0 | 30 | -50 | -50 | a |
| 33 | Comp. ex. | A | A | 800 | 50 | 20 | 40 | 10 | 30 | -10 | -20 | a |
| 34 | Comp. ex. | A | A | 720 | 50 | 20 | 40 | 0 | 30 | -40 | -40 | a |
| 35 | Comp. ex. | A | A | 800 | 30 | 20 | 67 | 0 | 10 | -40 | -40 | a |
| 36 | Comp. ex. | A | A | 800 | 34 | 4 | 12 | 0 | 30 | -40 | -40 | a |
| 37 | Comp. ex. | B | B | 800 | 50 | 20 | 40 | 0 | 30 | -40 | -40 | a |
| 38 | Comp. ex. | A | A | 800 | 50 | 20 | 40 | -20 | 30 | -20 | 0 | a |

| | | | | | | | | | | | | |
|---|---|---|---|---|---|---|---|---|---|---|---|---|
| *Underlines indicate outside scope of production conditions of present invention | | | | | | | | | | | | |

### (Evaluation of Tensile Strength)

For each steel sheet, a JIS No. 5 tensile test piece having a direction perpendicular to the rolling direction as a longitudinal direction was taken and subjected to a tensile test based on JIS Z 2241: 2011 to find the tensile strength. This was evaluated in the following way:
Evaluation AAA: 1180 MPa or more
Evaluation AA: 980 MPa or more and less than 1180 MPa
Evaluation A: 780 MPa or more and less than 980 MPa

### (Surface Layer Structure)

A sample cut to 30 mm×30 mm was taken and measured by GDS five times in the sheet thickness direction. The depth with a C concentration of 0.05% or less was entered in the "C≤0.05% depth" of Table 3.

Further, a sample cut to 25 mm×15 mm was taken and etched by a Nital reagent. A T section of the sample was observed under an SEM and the thickness of a layer with a ferrite area ratio of 90% or more was measured. The thickness was measured at equal intervals at 5 points in a range of 500 µm in the T direction and the average value was obtained. Here, the starting point of the "depth" is the interface of the plating layer and steel sheet.

Further, the sol. Si amount in the ferrite phase of a layer with a ferrite area ratio of 90% or more (high ferrite layer) was calculated by using an X-ray photoelectron spectrometer to find the ratio of the peak area intensity of Si(Si-Si,Fe-Si) with respect to Si(SiOₓ)+Si(Si-Si,Fe-Si) and multiplying the content of Si in the steel at a position of 4 µm in the thickness direction of the steel sheet from the interface of the steel sheet and plating layer. The Si content was measured by the previously explained GDS. Further, the sol. Al amount was found as the Al measured after deducting the insoluble residue on the filter paper occurring in the process of analysis of Al.

### (LME Resistance)

Two samples cut to 50 mm×100 mm size were cut from each plated steel sheet. These two samples were spot welded using dome radius type 8 mm welding electrodes by a weld angle of 2°, a squeezing force of 5.0 kN, a weld time of 1.2 seconds, and a weld current of 12 kA to produce a welded joint.

Referring to FIG. 2, the method of evaluation of the LME resistance will be explained. The LME resistance was evaluated by overlaying two steel sheets 21 and spot welding them, then determining the length of an LME crack (cracking of shoulder part 23) formed at the shoulder part of the welded part 22 formed. The "shoulder part" means the slanted part of the depressed recess formed by spot welding. The length of the cracking of shoulder part 23 was used for evaluation as shown below.

Evaluation AAA: 0 µm
Evaluation AA: more than 0 µm and less than 50 µm
Evaluation A: 50 µm or more and less than 160 µm
Evaluation B: 160 µm or more

The results of evaluation are shown in Table 3. In Table 3, the "C≤0.05% depth" means the depth with a C concentration of 0.05% or less, the "high α layer thickness" means the thickness of the layer with a ferrite area ratio of 90% or more, and the "Si+Al in the α phase" means the total of the sol. Si amount and sol. Al amount in the ferrite phase.

### [Table 3]

**Table 3**

| No. | Class | Steel surface layer structure | | | Performance | |
|---|---|---|---|---|---|---|
| | | C≤0.05% depth (µm) | High ferrite layer thickness (µm) | Si+Al in α phase (%) | Tensile strength (MPa) | LME resistance |
| 1 | Ex. | 8 | 8 | 0.3 | A | A |
| 2 | Ex. | 15 | 18 | 0.4 | AA | AA |
| 3 | Ex. | 13 | 18 | 0.5 | A | AA |
| 4 | Ex. | 21 | 20 | 0.5 | AA | AAA |
| 5 | Ex. | 20 | 22 | 0.4 | AA | AAA |
| 6 | Ex. | 25 | 30 | 0.6 | AA | AAA |
| 7 | Ex. | 24 | 40 | 0.5 | AA | AAA |
| 8 | Ex. | 22 | 28 | 0.4 | AA | AA |
| 9 | Ex. | 21 | 33 | 0.6 | AA | AAA |
| 10 | Ex. | 20 | 44 | 0.7 | AA | AAA |
| 11 | Ex. | 20 | 42 | 0.7 | AA | AAA |
| 12 | Ex. | 25 | 45 | 0.7 | AA | AAA |
| 13 | Ex. | 22 | 39 | 0.7 | AAA | AAA |
| 14 | Ex. | 8 | 8 | 0.3 | AAA | A |
| 15 | Ex. | 9 | 9 | 0.3 | AAA | AA |
| 16 | Ex. | 22 | 31 | 0.6 | AAA | AAA |
| 17 | Ex. | 40 | 80 | 1.2 | AA | AAA |
| 18 | Ex. | 29 | 37 | 1.0 | AAA | AAA |
| 19 | Ex. | 26 | 33 | 0.7 | AAA | AAA |
| 20 | Ex. | 26 | 33 | 0.8 | AAA | AAA |
| 21 | Ex. | 28 | 32 | 0.7 | AAA | AAA |
| 22 | Ex. | 26 | 31 | 0.7 | AAA | AAA |
| 23 | Ex. | 28 | 30 | 0.8 | AAA | AAA |
| 24 | Comp. ex. | 1 | 7 | 0.3 | AAA | B |
| 25 | Comp. ex. | 3 | 8 | 0.2 | AA | B |
| 26 | Comp. ex. | 6 | 15 | 0.9 | AA | B |
| 27 | Comp. ex. | 2 | 7 | 0.2 | AA | B |
| 28 | Comp. ex. | 7 | 18 | 1.0 | AA | B |
| 29 | Comp. ex. | 6 | 6 | 0.1 | AA | B |
| 30 | Comp. ex. | 0 | 0 | - | AA | B |
| 31 | Comp. ex. | 6 | 6 | 1.8 | AA | B |
| 32 | Comp. ex. | 7 | 7 | 1.6 | AA | B |
| 33 | Comp. ex. | 6 | 6 | 1.8 | AA | B |
| 34 | Comp. ex. | 2 | 2 | 1.0 | AA | B |
| 35 | Comp. ex. | 8 | 9 | 0.2 | AA | B |
| 36 | Comp. ex. | 6 | 5 | 1.1 | AA | B |
| 37 | Comp. ex. | 7 | 7 | 0.2 | AA | B |
| 38 | Comp. ex. | 8 | 8 | 0.2 | AA | B |

| | | | | | | |
|---|---|---|---|---|---|---|
| *Underlines indicate outside scope of present invention or desired results not obtained. | | | | | | |

Nos. 1 to 23 are examples of the present invention and had high LME resistance.

In No. 24, the C amount of the steel sheet was large. For this reason, even near the surface layer, the C amount was large, the C amount of the surface layer did not become low even due to decarburization, the depth with a C concentration measured by GDS of 0.05% or less was shallow, and the thickness of the high ferrite layer became thin, As a result, the LME resistance became inferior.

In No. 25, the Si amount of the steel sheet was small. For this reason, decarburization at the surface layer part did not progress, the depth with a C concentration measured by GDS of 0.05% or less was shallow, and the contents of the sol. Si and sol. Al in the ferrite phase became low. As a result, the LME resistance became inferior.

In No. 26, the Si amount of the steel sheet was large. For this reason, external oxidation progressed, decarburization at the surface was suppressed, and the depth with a C concentration measured by GDS of 0.05% or less became shallow. As a result, the LME resistance became inferior.

In No. 27, the sol. Al amount of the steel sheet was small. For this reason, decarburization at the surface layer part did not progress, the depth with a C concentration measured by GDS of 0.05% or less was shallow, the thickness of the high ferrite layer was shallow. Further, the contents of the sol. Si and sol. Al in the ferrite phase became low. As a result, the LME resistance became inferior.

In No. 28, the Al amount of the steel sheet was large. For this reason, external oxidation progressed, decarburization at the surface was suppressed, and the depth with a C concentration measured by GDS of 0.05% or less became shallow. As a result, the LME resistance became inferior.

In No. 29, the total of the Si amount and Al amount of the steel sheet was small. For this reason, decarburization at the surface layer part did not progress, the depth with a C concentration measured by GDS of 0.05% or less was shallow, the thickness of the high ferrite layer was shallow, and the contents of the sol. Si and sol. Al in the ferrite phase became low. As a result, the LME resistance became inferior.

In No. 30, the dew point of the first half of holding at the time of annealing was low. For this reason, decarburization of the surface layer and internal oxidation did not progress and the depth with a C concentration measured by GDS of 0.05% or less and the thickness of the high ferrite layer became 0. Therefore, the contents of the sol. Si and sol. Al in the ferrite phase could not be measured. As a result, the LME resistance became inferior.

In No. 31, the dew point of the first half of holding at the time of annealing was high. For this reason, external oxidation progressed, decarburization at the surface was suppressed, the depth with a C concentration measured by GDS of 0.05% or less was shallow, and the thickness of the high ferrite layer became thin. As a result, the LME resistance became inferior.

In No. 32, the dew point of the second half of holding at the time of annealing was low. For this reason, decarburization of the surface layer did not progress, the depth with a C concentration measured by GDS of 0.05% or less was shallow, and the thickness of the high ferrite layer became thin. As a result, the LME resistance became inferior.

In No. 33, the dew point of the second half of holding at the time of annealing was high. External oxidation progressed, decarburization at the surface was suppressed, the depth with a C concentration measured by GDS of 0.05% or less was shallow, and the thickness of the high ferrite layer became thin. As a result, the LME resistance became inferior.

In No. 34, the holding temperature at the time of annealing was low. For this reason, decarburization of the surface layer and internal oxidation did not progress, the depth with a C concentration measured by GDS of 0.05% or less was shallow, and the thickness of the high ferrite layer became thin. As a result, the LME resistance became inferior.

In No. 35, the holding time in annealing was 30 seconds. The time was within the above-mentioned range, but the dew point was switched at the point of time of elapse of 20 seconds, therefore the ratio of the first half holding time was great and the ratio of the second half holding time was relatively small. For this reason, Si and Al did not sufficiently diffuse from inside the steel sheet to the surface side and the contents of sol. Si and sol. Al in the ferrite phase became low. As a result, the LME resistance became inferior.

In No. 36, the holding time in annealing was 34 seconds. The time was within the above-mentioned range, but the dew point was switched at the point of time of elapse of 4 seconds, therefore the ratio of the first half holding time was small. For this reason, decarburization at the surface layer part did not progress, the depth with a C concentration measured by GDS of 0.05% or less was shallow, and the thickness of the high ferrite layer became thin. As a result, the LME resistance became inferior.

In No. 37, the grinding force of the brush used in the brush grinding was large. For this reason, the amount of grinding of the steel sheet surface layer become large and the strain entering the surface layer became small. For this reason, decarburization at the surface layer part did not progress, the depth with a C concentration measured by GDS of 0.05% or less was shallow, and the thickness of the high ferrite layer became thin. Further, the contents of the sol. Si and sol. Al in the ferrite phase became low. As a result, the LME resistance became inferior.

In No. 38, the dew point was not changed between the first half and second half of the annealing but was made a fixed dew point. For this reason, Si and Al did not sufficiently diffuse from inside the steel sheet to the surface side and the contents of sol. Si and sol. Al in the ferrite phase became low. As a result, the LME resistance became inferior.

### [INDUSTRIAL APPLICABILITY]

According to the present invention, it becomes possible to provide plated steel sheet having a high LME resistance. The plated steel sheet can be suitably used for automobiles, home electrical appliance products, building materials, and other applications, in particular for automobiles. Therefore, the present invention is an invention with extremely high applicability in industry.

### REFERENCE SIGNS LIST

11 plated steel sheet
12 steel sheet
13 plating layer
14 high ferrite layer
15 inside of steel sheet
21 steel sheet
22 welded part
23 cracking of shoulder part

## Claims

1. A plated steel sheet comprising
a steel sheet and
a plating layer provided on one surface or both surfaces of the steel sheet,
wherein
a tensile strength of the plated steel sheet is 780 MPa or more;
a chemical composition of the steel sheet comprises, by mass%;
C: 0.05 to 0.40%,
Si: 0.7 to 3.0%,
Mn: 0.1 to 5.0%,
sol. Al: 0.5 to 2.0%,
P: 0.0300% or less,
S: 0.0300% or less,
N: 0.0100% or less,
B: 0 to 0.0100%,
Ti: 0 to 0.1500%,
Nb: 0 to 0.150%,
V: 0 to 0.150%,
Cr: 0 to 2.00%,
Ni: 0 to 2.00%,
Cu: 0 to 2.0000%,
Mo: 0 to 1.00%,
W: 0 to 1.000%,
Ca: 0 to 0.1000%,
Mg: 0 to 0.100%,
Zr: 0 to 0.100%,
Hf: 0 to 0.100%,
REM: 0 to 0.1000% and
balance of Fe and impurities, a total of the contents of the Si and sol. Al being 1.3% or more;
the plating layer comprises Zn;
a depth in a thickness direction of the steel sheet from an interface of the steel sheet and the plating layer wherein a C concentration measured by GDS is 0.05% or less is 8 µm or more;
a thickness in a thickness direction of the steel sheet from an interface of the steel sheet and the plating layer of the layer with an area ratio of the ferrite phase of 90% or more is 8 µm or more; and
at a position of 4 µm in a thickness direction of the steel sheet from an interface of the steel sheet and the plating layer, the solute amounts of the metal Si and metal Al in the ferrite phase are a total of 0.3% or more.

2. The plated steel sheet according to claim 1, wherein the depth in the thickness direction of the steel sheet from the interface of the steel sheet and the plating layer wherein the C concentration measured by GDS is 0.05% or less is 15 µm or more.

3. The plated steel sheet according to claim 1, wherein the thickness in the thickness direction of the steel sheet from the interface of the steel sheet and the plating layer of the layer with an area ratio of ferrite of 90% or more is 20 µm or more and the solute amounts of the metal Si and metal Al in the ferrite phase are a total of 0.5% or more.

4. The plated steel sheet according to any one of claims 1 to 3, wherein the plating layer comprises, by mass%, Fe: 0 to 3.0%, Al: 0 to 30.0%, Mg: 0 to 10.0%, and a balance of Zn and impurities.

5. The plated steel sheet according to claim 4, wherein the plating layer comprises, by mass%, Al: 10.0 to 30.0% and Mg: 4.5 to 10.0%.
